# EUROPEAN PATENT SPECIFICATION

(11) **EP 2 136 990 B1**
(45) Date of publication and mention of the grant of the patent: **24.10.2018**
(21) Application number: 08741647.5
(22) Date of filing: 18.04.2008
(51) Int. Cl.: B32B 5/16, B32B 11/02, E04D 5/10

(54) **COMPOSITE WATER-RETAINING SHEET MATERIAL**
WASSERBESTÄNDIGES VERBUNDBLATTMATERIAL
MATÉRIAU EN FEUILLE COMPOSITE À RÉTENTION D'EAU

(30) Priority: 19.04.2007 NL 1033721
(43) Date of publication of application: 30.12.2009
(73) Proprietor: Ubbink B.V., 6984 AA Doesburg (NL)
(72) Inventor: VAN SCHELLEBEEK, Dirk Johannes, NL-6715 LK Ede (NL); RAVESTEIN, Frans Gerrit, NL-3931 EL Woudenberg (NL)
(74) Representative: Peters, Sebastian Martinus
(86) International application number: PCT/NL2008/050226
(87) International publication number: WO 2008/130232

(56) References cited:
- DE-A1- 3 022 019
- DE-C1- 3 931 239
- GB-A- 1 316 444
- NL-C1- 1 023 629
- US-A1- 2005 072 114
- US-A1- 2006 251 807
- US-A1- 2011 281 094

## Description

### BACKGROUND OF THE INVENTION

The invention relates to a composite water-retaining sheet material, such as for instance used as roofing material, water guiding material in case of (lead) flashings or window connections, or in general as a lead substitute, according to the preamble of claim 1.

Such a composite water-retaining sheet material is for instance known from GB-A-1.316.444. This document discloses a roof covering material with a granular outer surface that comprises at least one layer of thermoplastic material wherein the granular surface is formed by granules comprising a thermoplastics material which is miscible with the said layer of thermoplastics material and fused to an outer surface of the layer and wherein the granules are so dispersed over the surface that water is readily drained between them.
US 2005/0072114 A1 discloses solar-reflective roofing granules formed by coating base mineral particles with a coating composition including an infrared-reflective pigment.
US 2006/0251807 A1 discloses roofing granules produced by suspending mineral particles in a selected medium to separate the individual particles, uniformly depositing a coating material, and curing the coating material.

Although the known roofing material functions adequately, there is a growing need for alternative roofing material the quality of which can be guaranteed for at least ten, preferably twenty years or more. There is a particular need for a roofing material wherein the granules remain adhered to the bitumen during the said period of time.

### SUMMARY OF THE INVENTION

An object of the present invention among others is providing a water-retaining sheet material the quality of which can be guaranteed for a long period of time.

According to one aspect of the present invention a composite water-retaining sheet material for roofs according to claim 1 is provided. By according to the invention using a gritty layer of synthetic granules it turns out to be possible to guarantee the quality of the water-retaining sheet material for a longer period of time. The look of the water-retaining sheet material will also remain virtually unchanged during the period of use. Because the melt flow index (MFI) is between approximately 40 to approximately 60, material from short chains turns out to be obtained and when this material is ground straight planes of fracture are obtained, resulting in a proper adhesion to bitumen. In case of a higher MFI the material will become too tough and in case of a lower MFI too brittle. Alternatively or additionally an extremely good quality is obtained when the bituminous material is APAO-, SEBS-, SBS-or APP-modified bituminous material.

In one embodiment of a composite water-retaining sheet material according to the invention, the synthetic granules have a colour that is different from the, generally black, colour of the layer of bituminous material. In this way it is easy to verify whether the gritty layer is fully covering, so that it is easy to verify whether the gritty layer offers sufficient protection for the water-retaining sheet material. Moreover the market demand for water-retaining sheet material in another colour than the usual black colour of bitumen, such as for instance red, blue or (pale) grey, can be complied with.

In a further embodiment of a composite water-retaining sheet material according to the invention, the granules are made out of a non-hygroscopic material. In that way the physical properties and colour of the granules will not be adversely affected by the absorption of moisture or light fractions from the bituminous material.

When the granules have been made out of a colour proof material, particularly when the granules are made out of a UV-radiation proof material, the granules will retain at least almost their original colour during the period of use, so that on the one hand the full covering of the gritty layer can easily be checked and on the other hand the look of the water-retaining sheet material remains at least substantially unchanged.

In a further preferred embodiment of a composite water-retaining sheet material according to the invention, the granules have at least one relatively sharp edge thus achieving a strong adhesion of the granules to the layer of bituminous material. Due to this sharp edge the granules have at least a slightly angular shape.

A further improved adhesion of the granules to the layer of bituminous material according to the invention turns out to be realised when the granules have different shapes, wherein the granules having different sizes is particularly advantageous to the full covering. It is furthermore preferred that there are approximately 400 gram/m² of granules.

An in all cases sufficient adhesion can be realised in an embodiment of a composite water-retaining sheet material according to the invention when approximately 80% by weight of the granules has a size that is between approximately 0.3 mm and approximately 0.8 mm.

In yet a further embodiment of a composite water-retaining sheet material according to the invention, the granules are obtained by grinding synthetic material. By grinding synthetic material not only granules with a (sharp) edge are produced, which improves the adhesion to the layer of bituminous material, it is also ensured that granules having different sizes and shapes are produced. By using suitably sized sieves granules of a suitable size for proper adhesion to the bituminous material can be selected.

An extremely good quality of water-retaining sheet material can be guaranteed when the granules are of polypropylene. The material from which the granules are made in one embodiment of a sheet material according to the invention preferably comprises a polypropylene natural with added master batch (approximately 2% by weight). Said master batch is in particular a mixture containing various added substances, such as pigment provider (preferably a metal oxide), a UV-stabiliser and a thermal stabiliser (preferably an anti-oxidant). The polypropylene may both be a homo- or a copolymer.

In a further embodiment of a composite water-retaining sheet material according to the invention, a wire gauze or stretch gauze is embedded in the layer of bituminous material. Said wire gauze provides shape-adaptability to the water-retaining sheet material, so that the water-retaining sheet material can be used in many, different places on a roof or similar structures.

The present invention also relates to a method for manufacturing a composite water-retaining sheet material for roofs as described above, which method comprises the step of manufacturing the layer of bituminous material, after which, when the layer of bituminous material has not yet solidified, synthetic granules, particularly an over-measure of synthetic granules, particularly having a colour that is different from the colour of the layer of bituminous material, are scattered on a side of the layer. By using an over-measure of synthetic granules, that means a larger quantity than necessary for coating the layer of bituminous material in a fully covering manner, the weight of the over-measure of synthetic granules causes granules that are in contact with the soft, not yet solidified bituminous material, to be pressed therein. In this way an even upper layer of synthetic granules can be realised. Moreover no additional means such as a roller will be necessary for pressing the granules in the layer of bituminous material. All this is preferably selected such that approximately 400 gram/m² of granules are left on the water-retaining sheet material.

In a preferred embodiment of a method according to the invention the synthetic granules will be granules of polypropylene (homo- or copolymer). Particularly when APAO-, SEBS-, SBS-, or APP-modified bituminous material is used, a good quality of water-retaining sheet material is obtained. Alternatively or additionally granules can be chosen having a melt flow index (MFI) between approximately 40 to approximately 60. In that way material is obtained from short chains and when ground, straight planes of fracture are obtained, resulting in a proper adhesion to bitumen. In case of a higher MFI the material will become too tough and in case of a lower MFI too brittle.

In a further embodiment of a method according to the invention, for the over-measure at least 300 gram/m², preferably (much) more than 1000 gram/m² of granules is chosen. In this way a sufficient impression of granules in the soft (not yet solidified) layer of bituminous material can be achieved in most cases, that means a sufficient adhesion of the granules to the layer of bituminous material can be achieved.

In one embodiment of a method according to the invention, granules that are not connected to the layer of bituminous material are removed therefrom by after the over-measure of granules has been scattered onto the layer, turning the layer with granules, so that the superfluous granules may fall off from the layer. Optionally an embodiment of a method according to the invention comprises a step of exerting a suction force on the granules after the layer of granules has been turned, so that granules that do not sufficiently adhere are removed from the layer. As an additional step it can be checked whether the applied synthetic granules form a fully covering top layer on the layer of bituminous material.

The aspects and measures described in this description and the claims of the application and/or shown in the drawings of this application may where possible also be used individually. Said individual aspects, such as the use of the synthetic granules and synthetic granules in combination with APAO-, SEBS-, SBS-, or APP-modified bituminous material and scattering an over-measure of synthetic granules on the still soft (i.e. not yet solidified) bituminous material, and other aspects may be the subject of divisional patent applications relating thereto. This particularly applies to the measures and aspects described per se in the sub claims.

### SHORT DESCRIPTION OF THE DRAWINGS

The invention will be elucidated on the basis of an exemplary embodiment shown in the attached drawing, in which:

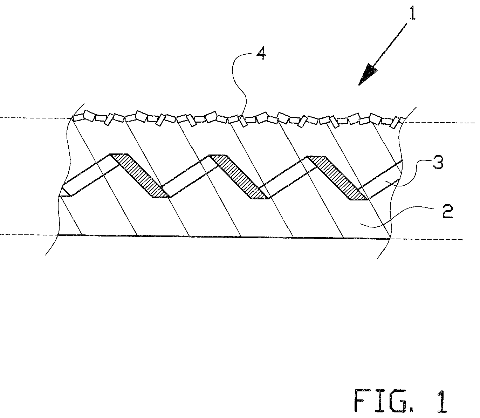

Figure 1 shows a schematic view in cross-section of an embodiment of a composite water-retaining sheet material according to the invention.

### DETAILED DESCRIPTION OF THE DRAWINGS

Figure 1 shows a schematic view in cross-section of an embodiment of a part of a composite water-retaining sheet material 1 according to the invention. The composite water-retaining sheet material 1 comprises a layer of bituminous material 2, in which in the shown exemplary embodiment a metal stretch gauze 3 has been embedded. It is noted that a wire gauze can also be used. The invention, however, is not limited thereto and the composite water-retaining sheet material 1 can also be made without wire gauze. Alternatively other elements, such as metal sheet, glass fibres and the like, have been embedded in the layer of bituminous material.

The composite water-retaining sheet material 1 further comprises a fully covering gritty layer 4 provided at a side of the layer of bituminous material 2, wherein the gritty layer 4 comprises synthetic granules.

The synthetic granules may have any colour, but in one embodiment have a colour that is different from the colour of the layer of bituminous material 2. Such a different colour may for instance be red, blue or (pale) grey. In this way it is easy to check visually whether the gritty layer 4 is fully covering.

The weather resistance of the composite water-retaining sheet material 1 is improved when the granules are formed from a non-hygroscopic material, from a colour proof material, from a UV-radiation proof material or a material that has two or more of the aforementioned properties.

In the exemplary embodiment shown in figure 1, the granules have at least one relatively sharp edge, so that a strong adhesion of the granules to or a firm engagement of the granules in the bituminous layer 2 is achieved.

As schematically shown in figure 1, the granules have different shapes, and additionally or alternatively have different sizes. As a result it is easy to obtain a sufficiently full cover of the composite water-retaining sheet material 1 by the gritty layer 4. Particularly a distribution of the sizes of the granules, wherein approximately 80% by weight of the granules has a size of between approximately 0.3 mm and approximately 0.8 mm, has turned out to be advantageous. It turned out to be advantageous when the size of the particles is 1.5 mm at the most.

The granules used in figure 1 have been obtained by grinding synthetic material, as a result of which in a relatively easy way granules of different shapes and sizes are produced.

Although granules of any synthetic material can be used, polypropylene granules simply meet the above-mentioned properties so that a long term guarantee can be given as regards the quality and the look of the water-retaining sheet material.

The bituminous material shown in figure 1 is APAO- SEBS- SBS- or APP-modified bituminous material, which is extremely suitable for providing a good quality of sheet material with synthetic granules, particularly granules of polypropylene.

The composite water-retaining sheet material for roofs schematically shown in figure 1 can be made in the following way.

First of all the layer of bituminous material is made. Then, when the layer of bituminous material is still soft, meaning not yet solidified, an over-measure of synthetic granules, particularly having a colour that is different from the colour of the layer of bituminous material, is scattered onto a side of the layer. By using an over-measure of synthetic granules, that means a larger quantity than necessary for coating the layer of bituminous material in a fully covering way, the weight of the over-measure of synthetic granules is used for pressing granules contacting the bituminous material into the soft, not yet solidified bituminous material. In this way an even upper layer of synthetic granules can be realised. For the over-measure at least 300 gram/m², preferably (much) more than 1000 gram/m² of granules should be chosen. In this way a sufficient impression of granules in the soft layer of bituminous material can be achieved in most cases, that means a sufficient adhesion of the granules to the layer of bituminous material can be achieved.

Subsequently granules that are not connected to the layer of bituminous material are removed therefrom by after the over-measure of granules has been scattered onto the layer, turning the layer with granules, so that the superfluous granules may fall off from the layer. Optionally a suction force may be exerted on the granules, so that granules that do not sufficiently adhere are removed from the layer. Finally a check may take place whether the applied synthetic granules form a fully covering top layer on the layer of bituminous material.

## Claims

1. Composite water-retaining sheet material comprising:
a layer of bituminous material, and
a fully covering gritty layer provided on a side of the layer of bituminous material, wherein the gritty layer comprises synthetic granules, **characterised in that** the bituminous material is APAO-, SEBS-, SBS- or APP-modified bituminous material and wherein the granules are of polypropylene (homo- or copolymer).

2. Composite water-retaining sheet material according to claim 1, wherein the synthetic granules have a colour that is different from the colour of the layer of bituminous material.

3. Composite water-retaining sheet material according any one of the preceding claims, wherein the granules are made out of a non-hygroscopic material.

4. Composite water-retaining sheet material according to any one of the preceding claims, wherein the granules are made out of a colour proof material.

5. Composite water-retaining sheet material according to claim 4, wherein the granules are made out of a UV-radiation proof material.

6. Composite water-retaining sheet material according to any one of the preceding claims, wherein the granules have at least one relatively sharp edge.

7. Composite water-retaining sheet material according to any one of the preceding claims, wherein the granules have different shapes.

8. Composite water-retaining sheet material according to any one of the preceding claims, wherein the granules have different sizes.

9. Composite water-retaining sheet material according to claim 8, wherein 80% by weight of the granules have a size that is between 0.3 mm and 0.8 mm.

10. Composite water-retaining sheet material according to any one of the preceding claims, wherein the granules are obtained by grinding synthetic material.

11. Composite water-retaining sheet material according to any one of the preceding claims, wherein a wire gauze or stretch gauze is embedded in the layer of bituminous material.

12. Method for manufacturing a composite water-retaining sheet material for roofs according to any one of the preceding claims, which method comprises the step of manufacturing the layer of bituminous material, after which, when the layer of bituminous material has not yet solidified, synthetic granules of polypropylene are scattered on a side of the layer.

13. Method according to claim 12, wherein an over-measure of polypropylene granules are scattered on a side of the layer, wherein particularly for the over-measure at least 300 gram/m², preferably more than 1000 gram/m² of granules is chosen.

14. Method according to claim 12 or 13, wherein after the granules have been scattered onto the layer, the layer with granules is turned, so that the superfluous granules may fall off from the layer.

15. Method according to claim 14, wherein the method comprises a step of exerting a suction force on the granules after the layer of granules has been turned.

16. Method according to any one of the claims 12-15, wherein the method comprises the step of checking whether the top layer of synthetic material is fully covering.

17. Method according to any one of the claims 12-16, wherein the method comprises the step of using granules of a colour that is different from the colour of the layer of bituminous material.

## Patentansprüche

1. Komposit-wasserhaltendes-Schichtmaterial, umfassend:
eine Schicht von bituminösen Material, und
eine vollständig beschichtende, grobkörnige Schicht, angeordnet auf einer Seite der Schicht des bituminösen Materials, wobei die grobkörnige Schicht synthetische Granula umfasst, **dadurch gekennzeichnet, dass** das bituminöse Material APAO-, SEBS-, SBS- oder APP-modifiziertes bituminöses Material ist, und wobei die Granula aus Polypropylen (Homo- oder Copolymer) sind.

2. Komposit-wasserhaltendes-Schichtmaterial gemäß Anspruch 1, wobei die synthetischen Granula eine Farbe haben, die verschieden ist von der Farbe der Schicht von bituminösem Material.

3. Komposit-wasserhaltendes-Schichtmaterial gemäß irgendeinem der vorhergehenden Ansprüche, wobei die Granula hergestellt sind aus nichthygroskopischem Material.

4. Komposit-wasserhaltendes-Schichtmaterial gemäß irgendeinem der vorhergehenden Ansprüche, wobei die Granula aus einem farbfesten Material hergestellt sind.

5. Komposit-wasserhaltendes-Schichtmaterial gemäß Anspruch 4, wobei die Granula aus einem UV-Strahlungs-festen-Material hergestellt sind.

6. Komposit-wasserhaltendes-Schichtmaterial gemäß irgendeinem der vorhergehenden Ansprüche, wobei die Granula mindestens eine relativ scharfe Kante haben.

7. Komposit-wasserhaltendes-Schichtmaterial gemäß irgendeinem der vorhergehenden Ansprüche, wobei die Granula verschiedene Gestalten haben.

8. Komposit-wasserhaltendes-Schichtmaterial gemäß irgendeinem der vorhergehenden Ansprüche, wobei die Granula verschieden Größen haben.

9. Komposit-wasserhaltendes-Schichtmaterial gemäß Anspruch 8, worin 80 Gew.-% der Granula eine Größe haben, die zwischen 0,3 mm und 0,8 mm ist.

10. Komposit-wasserhaltendes-Schichtmaterial gemäß irgendeinem der vorhergehenden Ansprüche, wobei die Granula durch Vermahlen von synthetischem Material erhalten werden.

11. Komposit-wasserhaltendes-Schichtmaterial gemäß irgendeinem der vorhergehenden Ansprüche, wobei ein Drahtgewebe oder Streckgewebe in die Schicht von bituminösem Material eingebettet ist.

12. Verfahren zur Herstellung eines Komposit-wasserhaltendem-Schichtmaterials für Dächer gemäß irgendeinem der vorhergehenden Ansprüche, wobei das Verfahren umfasst den Schritt der Herstellung der Schicht von bituminösem Material, nachdem, wenn die Schicht aus bituminösem Material noch nicht vollständig verfestigt ist, synthetische Granula aus Polypropylen auf einer Seite der Schicht verstreut werden.

13. Verfahren nach Anspruch 12, worin ein Übermaß an Polypropylengranula auf einer Seite der Schicht verstreut werden, wobei insbesondere für das Übermaß mindestens 300 Gramm/m², vorzugsweise mehr als 1 000 Gramm/m², Granula gewählt werden.

14. Verfahren nach Anspruch 12 oder 13, wobei nachdem die Granula auf die Schicht verstreut wurden, die Schicht mit den Granula gewendet wird, so dass überflüssige Granula von der Schicht abfallen können.

15. Verfahren nach Anspruch 14, wobei das Verfahren einen Schritt der Ausübung einer Saugkraft auf die Granula, nachdem die Schicht von Granula gewendet wurde, umfasst.

16. Verfahren nach irgendeinem der Ansprüche 12-15, wobei das Verfahren den Schritt der Überprüfung umfasst, ob die obere Schicht des synthetischen Materials vollständig beschichtet ist.

17. Verfahren nach irgendeinem der Ansprüche 12-16, wobei das Verfahren umfasst den Schritt der Verwendung von Granula mit einer Farbe, die sich von der Farbe der Schicht des bituminösen Materials unterscheidet.

## Revendications

1. Matériau en feuille composite retenant l'eau comprenant :
une couche de matériau bitumineux, et
une couche granuleuse à recouvrement total disposée sur un côté de la couche de matériau bitumineux,
dans lequel la couche granuleuse comprend des granules synthétiques, **caractérisé en ce que** le matériau bitumineux est un matériau bitumineux modifié par APAO, SEBS, SBS ou APP, et dans lequel les granules sont en polypropylène (homo- ou co-polymère).

2. Matériau en feuille composite retenant l'eau selon la revendication 1, dans lequel les granules synthétiques ont une couleur qui est différente de la couleur de la couche de matériau bitumineux.

3. Matériau en feuille composite retenant l'eau selon l'une quelconque des revendications précédentes, dans lequel les granules sont constitués d'un matériau non hygroscopique.

4. Matériau en feuille composite retenant l'eau selon l'une quelconque des revendications précédentes, dans lequel les granules sont constitués d'un matériau résistant à la coloration.

5. Matériau en feuille composite retenant l'eau selon la revendication 4, dans lequel les granules sont constitués d'un matériau résistant au rayonnement UV.

6. Matériau en feuille composite retenant l'eau selon l'une quelconque des revendications précédentes, dans lequel les granules ont au moins un bord relativement aiguisé.

7. Matériau en feuille composite retenant l'eau selon l'une quelconque des revendications précédentes, dans lequel les granules ont des formes différentes.

8. Matériau en feuille composite retenant l'eau selon l'une quelconque des revendications précédentes, dans lequel les granules ont des tailles différentes.

9. Matériau en feuille composite retenant l'eau selon la revendication 8, dans lequel 80 % en poids des granules ont une taille qui est comprise entre 0,3 mm et 0,8 mm.

10. Matériau en feuille composite retenant l'eau selon l'une quelconque des revendications précédentes, dans lequel les granules sont obtenus par broyage d'un matériau synthétique.

11. Matériau en feuille composite retenant l'eau selon l'une quelconque des revendications précédentes, dans lequel une toile métallique ou une toile extensible est encastrée dans la couche de matériau bitumineux.

12. Procédé pour fabriquer un matériau en feuille composite retenant l'eau pour toitures selon l'une quelconque des revendications précédentes, lequel procédé comprend l'étape de fabrication de la couche de matériau bitumineux, après quoi, quand la couche de matériau bitumineux n'a pas encore solidifié, des granules synthétiques de polypropylène sont dispersés sur un côté de la couche.

13. Procédé selon la revendication 12, dans lequel une surépaisseur de granules de polypropylène est disposée sur un côté de la couche, et dans lequel en particulier pour la surépaisseur au moins 300 g/m², de préférence plus de 1000 g/m² de granules sont choisis.

14. Procédé selon la revendication 12 ou 13, dans lequel, après que les granules ont été dispersés sur la couche, la couche avec les granules est retournée, de façon que les granules superflus puissent tomber de la couche.

15. Procédé selon la revendication 14, lequel procédé comprend une étape de déploiement d'une force d'aspiration sur les granules après que la couche de granules a été retournée.

16. Procédé selon l'une quelconque des revendications 12 à 15, lequel procédé comprend l'étape de vérification que la couche supérieure de matériau synthétique réalise un recouvrement total.

17. Procédé selon l'une quelconque des revendications 12 à 16, lequel procédé comprend l'étape d'utilisation de granules ayant une couleur qui est différente de la couleur de la couche de matériau bitumineux.
